# EUROPÄISCHE PATENTSCHRIFT

(11) **EP 0 477 950 B1**
(45) Veröffentlichungstag und Bekanntmachung des Hinweises auf die Patenterteilung: **09.02.1994**
(21) Anmeldenummer: 91116470.5
(22) Anmeldetag: 26.09.1991
(51) Int. Cl.: A01J 5/08

(54) **Zitzengummi**
Teat cup liner
Manchon trayeur en caoutchouc

(30) Priorität: 28.09.1990 DE 4030767
(43) Veröffentlichungstag der Anmeldung: 01.04.1992
(73) Patentinhaber: Biomelktechnik Hoefelmayr & Co., CH-9052 Niederteufen (CH)
(72) Erfinder: Hoefelmayr, Tilman, Dr., CH-9052 Niederteufen (CH); Maier, Jakob, W-8939 Türkheim (DE)
(74) Vertreter: Grünecker, Kinkeldey, Stockmair & Schwanhäusser Anwaltssozietät

(56) Entgegenhaltungen:
- EP-A- 0 027 210
- EP-A- 0 043 264
- DE-A- 2 528 386
- DE-U- 1 769 640
- GB-A- 117 307
- GB-A- 1 161 118
- US-A- 3 818 867
- US-A- 4 651 676

## Beschreibung

Die Erfindung betrifft einen Melkbecher mit einer Melkbecherhülse und einem Zitzengummi aus einem geformten Schlauchteil, an dessen Außenseite ein Halterand zum Übergreifen eines Randes der Melkbecherhülse angeformt ist.

Ein derartiger Melkbecher gemäß dem Oberbegriff des Anspruchs 1 ist bereits aus der GB-A-11 61 118 bekannt. Bei diesem Melkbecher ist die Melkbecherhülse aus zwei Teilen gefertigt und zwar aus einem im wesentlichen zylinderförmigen Hülsenteil und einem einen größeren Außendurchmesser aufweisenden ringförmigen Flanschteil. Der Flanschteil weist einen äußeren, quer zur Längsachse der Melkbecherhülse verlaufenden Rand auf. Das Zitzengummi erstreckt sich mit seinem Schlauchteil in die Melkbecherhülse hinein und der an der Außenseite des Kopfteils des Zitzengummis angebrachte Halterand umgreift den Flanschansatz der Melkbecherhülse.

Aus der US-A-3,818,867 ist auch bereits ein Melkbecher bekannt, bei dem die Melkbecherhülse in einem unteren Teil aus einem durchsichtigen Kunststoffteil besteht. Zur Verbesserung der Stabilität dieser Kunststoffmelkbecherhülse, insbesondere in bezug auf die Kräfte, die während der Pulsation auf die Melkbecherhülse ausgeübt werden, ist auf den äußeren Umfang des aus Kunststoff bestehenden Melkbecherhülsenteils ein rohrförmiges Zylinderteil aus Metall aufgezogen, dessen oberer Rand in Längsrichtung der Melkbecherhülse über den oberen Rand des Kunststoffmelkbecherhülsenteils hinaus vorsteht. Ein Zitzengummi steht mit seinem schlauchförmigen Ansatz in die Melkbecherhülse hinein vor, während der am Kopfteil des Zitzengummis angebrachte Halterand den oberen, in Längsrichtung der Melkbecher weisenden Rand des Metallringes übergreift und sich auf der Außenseite dieses Metallringes abstützt.

Es hat sich die Erkenntnis durchgesetzt, daß ein weiches, flexibles, sich an die Zitze anschmiegendes und dehnbares Gummimaterial physiologisch besser geeignet für den Melkvorgang ist als entsprechend harte Gummis. Derartige weiche Gummimaterialien ermöglichen eine sanftere Massage der Zitze und sie führen weniger zu Einschnürungen an der Zitzenbasis. Weiterhin sind solche Gummimaterialien gewebefreundlicher, indem sie sich besser an das Gewebe anpassen. Dies führt gleichzeitig dazu, daß Zitzengummis aus einem solchen Material auch universeller einsetzbar sind, da sie sich besser an die Zitzen unterschiedlicher Form und Größe anpassen. Schließlich üben solche Zitzengummis auch eine verbesserte Stützstrumpffunktion für die Zitze aus, da sie aufgrund ihrer besseren Anpassung an die Zitze eine höhere Reibung an der Zitzenhaut ergeben und damit das unerwünschte Klettern des Zitzengummis gegen die Zitzenbasis verhindern.

Obwohl Zitzengummis aus einem solchen weichen Material besonders viele Vorzüge aufweisen, haben sie sich dennoch bisher in der Alltagspraxis aufgrund gravierender anderer Nachteile nicht durchsetzen können. Ein wesentlicher Grund hierfür besteht in der Tatsache, daß die Kerbzähigkeit wie auch die Reißfähigkeit des in Frage kommenden Gummimaterials um so geringer sind, je weicher und anschmiegsamer der aus einem solchen Gummimaterial hergestellte Zitzengummi ist. Das Hauptproblem bei der Verwendung derartiger weicher Gummimaterialien besteht darin, daß sie gegen Schläge, die bei dem üblichen rauhen Betrieb beim Melken häufiger auftreten können, sehr empfindlich sind. Besonders gefährdet ist in dieser Hinsicht der Halterand des Zitzengummis, der die Melkbecherhülse übergreift. Dieser Halterand wird nicht in erster Linie durch Tritte der Kuh oder durch Schläge gefährdet, die in Längsrichtung des Melkbechers auf den Kopf des Zitzengummis ausgeübt werden. Die eigentliche Gefahr rührt von Stößen oder Schlägen her, die von oben seitlich auf den Melkbecher treffen. Daß derartige Schläge häufig auftreten, hängt mit der Konstruktion des Melkzeuges zusammen, bei dem an einem Sammelstück die vier schweren Melkbecher an ca. 18 cm langen sehr flexiblen Milchabführschläuchen hängen. Jede etwas schnellere Bewegung des Sammelstücks, sei es bei der Melkzeugabnahme, sei es beim Abfallen, oder sei es beim Transport, kann zu einer entsprecheenden schwunghaften Bewegung des Melkbechers führen. Da der Melkbecher aber an seiner Unterseite von dem flexiblen Milchschlauch geführt wird, kommt es meistens zu Schlägen, die die Oberseite des Bechers von oben seitlich treffen, wenn ein Hindernis vorhanden ist. Derartige Hindernisse sind in großer Zahl gegeben, wie etwa die scharfkantigen Gitterroste, der Betonboden, Melkstandkante oder das Melkgerust. Trifft ein Melkbecher seitlich auf ein solches Hindernis, so weicht der Kopf des Zitzengummis seitlich aus, während der den Melkbecher übergreifende Halterand den gesamten Stoß auffängt. Das führt zu einem Durchschlagen des unter einer gewissen Vorspannung stenden Halterandes in Form von kleinen, oft unbemerkten Löchern, Wobei die Verletzung und dann das Durchbrechen in der Regel von innen her erfolgt. Da der Zwischenraum zwischen dem Zitzengummi und dem Melkbecher beim Melken unter einem pulsierenden Unterdruck steht, tritt häufig der Fall ein, daß durch diese Schlaglöcher Falsch-Luft in den Pulsraum gelangt, wodurch sich eine schlechte Pulsierung ergibt. Schließlich wird über die entstandenen Schlaglöcher bei der Reinigung der Melkbecher häufig zusätzlich noch Wasser in den Pulsraum angesaugt, was zu einer teilweisen Blockierung der Pulswege während des späteren Melkvorganges und insgesamt zu einer Pulsationsfehlfunktion führt, die schließlich größte Mastitispobleme nach sich zieht. Die Abnahme der Zitzengummis von den Melkbechern erfolgt aber in der Praxis nur in größeren Zeitabständen, so daß die durch die Schlaglöcher aufgetretenen Probleme oft erst sehr spät erkannt werden.

Es wurden bereits zahlreiche Überlegungen nach Möglichkeiten durchgeführt, um das Durchschlagen der Zitzengummis an den Rändern der Melkbecherhülse zu verhindern. Eine Möglichkeit würde darin bestehen, insgesamt ein härteres Gummimaterial zu verwenden. Dies würde aber bedeuten, daß man gerade auf die Vorteile verzichten müßte, die die Verwendung eines weichen Zitzengummimaterials mit sich bringt. Eine weitere Möglichkeit bestünde darin, den Halterand des Zitzengummis in Form eines dickeren Wulstes auszubilden, um dadurch die Durchschlagwahrscheinlichkeit herabzusetzen. Eine solche Lösung hätte aber den Nachteil, daß die Melkbecherköpfe verhältnismäßig unhandlich werden, denn diese Köpfe müssen gerade bei engstrichigen Kühen sehr nahe zusammenkommen können, d.h. sie dürfen an ihrem Kopf nur einen verhältnismäßig kleinen Durchmesser haben. Weitere Schwierigkeiten würden sich mit einer solchen Lösung bei der Verwendung in manchen Waschautomaten ergeben, bei denen die Melkbecher mit ihrem Kopfteil in Waschaufnehmer hineingesteckt werden, die auf der Außenseite abdichten und deshalb einen standardisierten Innendurchmesser haben. Ein weiterer Nachteil eines solchen Wulstes ergäbe sich bei der Herstellung solcher Zitzengummis, da die Materialkosten steigen würden und insbesodnere die Vulkanisierzeit erhöht würde, was zusätzlich die Gesamtkosten erhöhen würde.

Es wurde auch bereits versucht, den Halterand des Zitzengummis derart auszuformen, daß an der Stelle der Kante der Melkbecherhülse eine Ausnehmung in dem Halterand vorgesehen ist, so daß der Halterand in diesem Bereich einen bestimmten Abstand von dem Melkbecherhülsenrand hat und lediglich auf der glatten Außenseite des Melkbechers mit diesem in Berührung steht. Auf diese Weise kann der Gummi des Halterandes zunächst über eine gewisse Strecke durchfedern, bevor er zur Anlage an dem Rand der Melkbecherhülse kommt.

Weiterhin sind bereits durch die EP-B1-0 043 264 Versuche bekannt geworden, den Kopf des Zitzengummis durch eine spezielle harte Außenkappe gegen Durchschlag zu schützen. Derartige Schutzkappen sind entweder aufsteckbar oder auch fest mit der Metallbecherhülse verbunden. Außer ihrer Unhandlichkeit ist jeder Art von Schutzkappenlösung der Nachteil gemeinsam, daß sich zwischen dem flexiblen Gummi und der Kappe Schmutz ansammelt, der in der Praxis kaum mehr entfernt werden kann. Die Folge ist nicht nur eine hygienisch untragbare Situation - da es sich um die Herstellung von Lebensmitteln handelt -, sondern zudem entwickeln sich unter der Kappe auf Schmutz und Feuchtigkeit wachsende Pilze, die den Gummi allmählich durchsetzen und zerstören. Aus diesen Gründen sind alle Arten von Schutzkappen zur Lösung des Durchschlagproblems unbrauchbar.

Ähnlche Probleme treten bei dem aus der US-A-4651676 bekannten Melkbecher auf, bei dem das Zitzengummi einen sehr niedrigen Kopf aufweist, an dessen äußeren unteren Ende eine Ringlippe ausgebidlet ist, die über den oberen Rand der Melkbecherhülse greift. Zum Schutz des Kopfes des Zitzengummis ist zusätzlich an dem Melkbecher ein den oberen Kopf des Zitzengummis völlig umschließender Schutzring bzw. Schutzbecher ausgebildet, dessen oberer Rand noch über das obere Ende des Zitzenkopfes hinaus vorsteht.

Entsprechend einem anderen Versuch wurden auf der Außenseite des Halterandes in Längs- oder auch Querrichtung des Zitzengummis Dämpfungsrippen angeformt. Abgesehen davon, daß auch durch diese Rippen die erwünschte Durchschlagfestigkeit nicht erreicht werden konnte, ergaben sich zusätzliche Hygieneprobleme, da die Ecken derartiger Rippen besonders schwierig zu reinigen sind und sich jeweils als Schmutzfänger erwiesen haben.

Normalerweise sind die Halteränder der Zitzengummis so ausgeformt, daß sie beim Aufziehen auf den Melkbecher unter Spannung gesetzt werden. Diese Spannung des Halterandes erhöht natürlich die Gefahr eines Durchschlagens oder Reißens des Zitzengummis bei auftreffenden Schlägen. Verringert man jedoch diese Spannung, was eine Möglichekit zur Herabsetzung der Durchschlagwahrscheinlichkeit sein könnte, so tritt der erheblich größere Nachteil ein, daß das Zitzengummi insgesamt nicht mehr sicher auf dem Melkbecher sitzt, was zu einem Eindringen von Wasser in den Melkbecherzwischenraum bei der Reinigung wie auch zu einem Verdrehen des Zitzengummis, d.h einem Auswringen der Zitze, während der Melkphase führen kann. Die sich hierdurch ergebende Mastitisgefahr würde bei weitem den Vorteil überwiegen, der sich durch den Einsatz eines weichen Gummis ergeben könnte.

Bei Zitzengummis mit sehr geringer Kopfhöhe kann auch die Gefahr eines Durchschlagens des Halterandes gegeben sein, wenn der Melkbecher mit dem Zitzengummi kopfvoraus oder auch seitlich von vorn auf ein Hindernis auftrifft. Die Wahrscheinlichkeit des Durchschlagens des Halterandes könnte in diesen Fällen dadurch herabgesetzt werden, daß ein hoher langer Zitzengummikopf verwandt wird, dessen Ausweichweg länger und dessen Ausweichkraft größer sind. Diese Köpfe haben aber den Nachteil, daß die Zitze weniger gestützt wird und daß ggf. bei kurzen Zitzen lediglich nur noch die Zitzenspitze vom Saugstutzen erfaßt wird. Hierdurch wird gleichzeitig die Gefahr des Abfallens des Melkbechers von der Zitze erhöht.

Eine weitere Möglichkeit zur Herabsetzung der Gefahr des Durchschlagens des Halterandes könnte darin bestehen, daß der Durchmesser des Zitzengummikopfes vergrößert wird. Hierbei würden sich aber dieselben Probleme beim Melken von engstrichigen Kühen ergeben wie bei der Verwendung von dickeren Wulsten für den Halterand, In solchen Fällen ergäbe sich insbesondere die Gefahr, daß kein unabhängiges Ausmelken der einzelnen Zitzen mehr möglich wäre, weil sich die einzelnen Köpfe gegenseitig beeinflussen und behindern.

Der vorliegenden Erfindung liegt die Aufgabe zugrunde, das Durchschlagen des Halterandes von Zitzengummis und insbesondere das Durchschlagen des Halterandes von Zitzengummis aus einem weichen Material zu verhindern.

Diese Aufgabe wird gemäß der Erfindung dadurch erreicht, daß auf dem in Längsrichtung der Melkbecherhülse und nach außen weisenden Teil des Randes der Melkbecherhülse ein aus einem anderen Material als das Material des Zitzengummis bestehenden Ring aufliegt, daß in dem dem in Längsrichtung und nach außen weisenden Teil des Randes der Melkbecherhülse gegenüberliegenden Teil des Halterandes eine Ausnehmung vorgesehen ist, in die der Ring einlegbar ist, und daß der Ring auf seiner dem Rand der Melkbecherhülse abgewandten Seite eine Fläche mit einem im Verhältnis zum Krümmungsradius des Melkbecherhülsenrandes größeren Krümmungsradius aufweist.

Hierdurch wird das Durchschlagverhalten des Halterandes entschieden verhindert.

Als zweckmäßig hat sich eine Ausbildung erwiesen, bei der der Ring auf seiner dem Rand der Melkbecherhülse zugewandten Seite eine zu dem Melkbecherhülsenrand komplementäre Formgebung hat. Obgleich sich hierbei die beste Kräfteverteilung und beste Absorption der Schlagwirkung ergibt, ist dennoch auch eine Anordnung möglich, bei der der Ring eine von der Form des Randes der Melkbecherhülse abweichende Form hat und lediglich über ein weiteres Material oder einen Körper aus dem Material des Zitzengummis gegen den Rand der Melkbecherhülse anliegt.

Unabhängig von der Form des Ringes ist es besonders zweckmäßig, den Ring aus einem im Verhältnis zum Material des Zitzengummis harten Material mit einer leichten Nachgiebigkeit zu wählen.

Eine wesentliche Erhöhung der Durchschlagfestigkeit läßt sich auch bereits dann erreichen, wenn der Ring aus einem weichen Material mit einer im Verhältnis zu der Kerbzähigkeit des Zitzengummimaterials erhöhten Kerbzähigkeit besteht.

Insbesondere dann, wenn der Ring in den Halterand eingeformt wird, wurden gute Ergebnisse erzielt, wenn der Ring aus einem Federstahl, aus Kunststoff, aus Hartgummi oder aus einem Textilmaterial bestand.

Als Kunststoffe für die Herstellung des Ringes haben sich besonders Polyamid, Polyäthylen, Polypropylen, Polyester, Polyurethan oder Polyvinylchlorid erwiesen.

Die größten Verbesserungen wurden bei der Verwendung eines Zitzengummis aus einem Silicongummi erzielt. Aufgrund dieser Verbesserung kann jetzt erst der uneingeschränkte Einsatz von Silicongummi im praktischen Alltagsbetrieb in Betracht gezogen werden.

Im folgenden soll die Erfindung anhand von in der Zeichnung dargestellten Ausführungsformen erläutert werden. In der Zeichnung zeigen:
- Fig.1: einen halbseitigen Schnitt durch einen Zitzengummihalterand an einer Melkbecherhülse, wie er bisher üblich war,
- Fig.2: zeigt einen Schnitt durch einen Zitzengummi mit Melkbecherhülse gemäß einer ersten Ausführungsform der Erfindung,
- Fig.3: zeigt eine Teildarstellung eines Zitzengummis gemäß Fig. 2 im entlasteten Zustand ohne Melkbecherhülse und ohne Durchschlagschutzring,
- Fig.4: einen Schnitt durch einen Durchschlagschutzring entlang der Linie IV-IV in Fig. 5,
- Fig.5: eine Ansicht von unten des in Fig. 4 gezeigten Ringes,
- Fig.6: eine Teilansicht einer weiteren Ausführungsform eines Zitzengummis, das an einer Melkbecherhülse gehalten ist, gemäß der Erfindung
- Fig.7: einen Schnitt durch einen Ring, der aus einem gewendelten Stahldraht besteht.

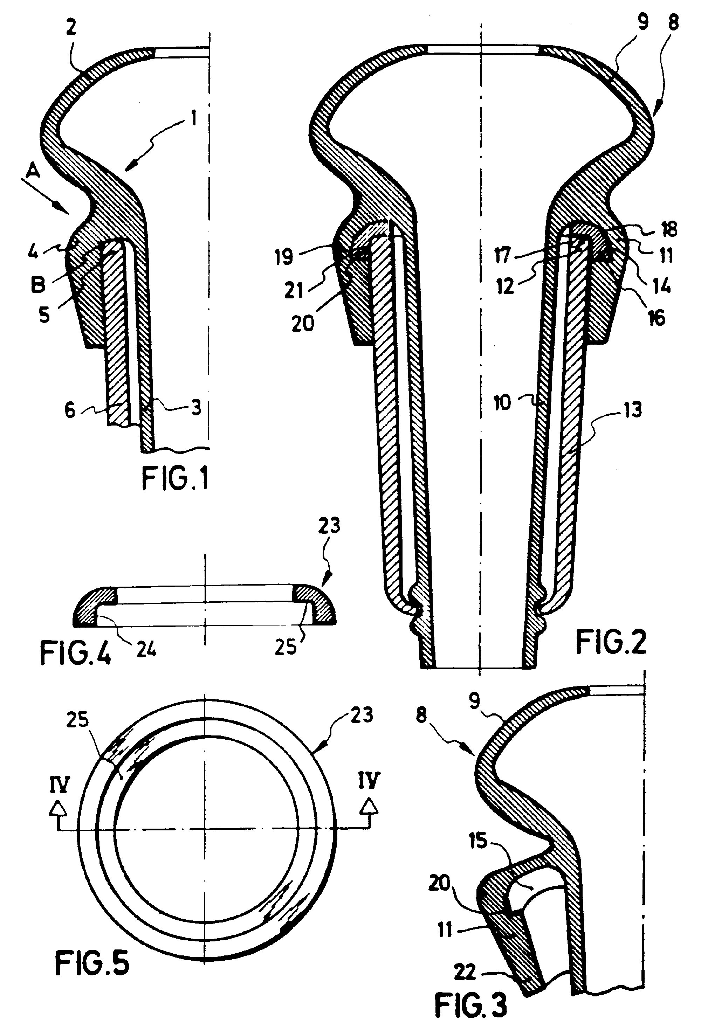

In der Fig. 1 ist ein allgemein mit 1 bezeichnetes schlauchförmiges Zitzengummi dargestellt, das einen Kopf 2, einen Saugstutzen 3 und einen auf der Außenseite angeformten Halterand 4 aufweist. Der Halterand 4 übergreift den freien Rand 5 einer Melkbecherhülse 6. Die Anordnung zeigt ein bekanntes Zitzengummi. Derartige Zitzengummis haben den Nachteil, daß bei seitlich auftreffenden Schlägen etwa aus der Richtung des eingezeichneten Pfeils A ein Durchschlagen des Halterandes 4 an dem Punkt B auftritt.

In der Fig. 2 ist ein allgemein mit 8 bezeichnetes Zitzengummi mit einem Kopf 9, einem Saugstutzen 10 sowie einem angegossenen ringförmigne Halterand 11 gezeigt. Der Halterand 11 übergreift den freien Rand 12 einer Melkbecherhülse 13. Bei dieser Ausführungsform der Erfindung weist der Teil 14 des Halterandes 11, der dem nach außen weisenden Teil des Randes 12 der Melkbecherhülse gegenüberliegt, eine Ausnehmung 15 auf, wie sie am besten aus Fig. 3 zu ersehen ist, in der das gleiche Zitzengummi ohne Melkbecherhülse dargestellt ist. In diese Ausnehmung 15 ist ein Ring 16 eingefügt, der auf seiner Innenseite 17 an die äußere Form des nach außen weisenden Randes 12 der Melkbecherhülse angepaßt ist. Auf seiner Außenseite 18 ist der Ring 16 derart ausgestaltet, daß seine Außenfläche an allen Stellen einen wesentlich größeren Krümmungsradius aufweist als der Krümmungsradius des Randes 12 der Melkbecherhülse 13. Der Ring 16 erstreckt sich im wesentlichen lediglich über den nach außen weisenden Teil des Randes der Melkbecherhülse, d.h. er überdeckt den in axialer Richtung weisenden Teil des Melkbecherhülse bis zu einer Stelle etwas unterhalb der Rundung der Melkbecherhülse auf der Außenseite der Melkbecherhülse.

Der Ring 16 besteht aus einem selbständigen Teil unabhängig von dem Zitzengummi 8 und kann deshalb getrennt von diesem ausgeformt werden. Zur Erleichterung des Einsetzen und des Halts des Ringes in dem Zitzengummi wird die Ausnehmung 15 in ihrem über dem glattrandigen Teil 19 der Melkbecherhülse liegenden Bereich in Form einer Winkelprofilausnehmung 20 ausgeführt. Hierdurch wird eine Art kantenförmige Ausnehmung gebildet, in die die Kante 21 des Ringes 16 einrasten kann.

Dadurch, daß in dem Halterand 11 eine der Form und dem Volumen des Ringes 16 entsprechende Ausnehmung 15 vorgesehen wird, wird beim Einsetzen des Ringes 16 und beim Einbau des Zitzengummis auf die Melkbecherhülse keine zusätzliche Spannung in dem Teil des Halterandes 11 erzeugt, der über dem Ring 16 liegt. Eine Spannung tritt im wesentlichen in dem Teil 22 (s. Fig. 3) auf, da dieser Teil entsprechend vorgeformt ist (d.h. im entspannten Zustand einen geringeren Innendurchmesser als der Außendurchmesser der Melkbecherhülse 13 aufweist).

Bei der Verwendung eines Zitzengummis aus Silicongummi, das typischerweise eine Härte zwischen 35 und 50 shore A haben kann und das eine hohe Elastizität bei gleichzeitig geringer Kerbzähigkeit aufweist, wurde mit gutem Erfolg ein Ring 16 aus einem normalen Gummi mit der Härte von etwa 60 bis 90 shore A verwandt. Gemäß einer anderen Ausführungsform wurde der Ring 16 aus einem weichen Polyäthylen (Härte ca. shore D 43) mit einer hohen Kerbfähigkeit gefertigt. Gute Resultate brachte aber auch ein Ring 16, der aus einem Polyamid 6 hergestellt war (PA 6).

Obgleich sowohl härtere Materialien wie auch weichere Materialien mit einer guten Kerbzähigkeit verwandt werden können, wurden bevorzugt Ringe aus einem Material verwandt, dessen Härte zwischen der Härte von unverstärktem Polyamid und Hartgummi lagen.

Ringe aus Polyamid, Polyäthylen und Polypropylen sind besonders preiswert herzustellen, da diese Kunststoffe als sogenannte Abfallprodukte sehr preiswert sind.

Sofern Zitzengummis aus Silicongummi verwandt werden, sollte darauf geachtet werden, daß der Ring aus einem mikrobenfesten Kunststoff besteht. Diese Forderung ist insbesondere bei der Verwendung von Polyurethanmaterialien zu beachten.

In den Fig. 4 und 5 ist ein Ring 23 ähnlich dem Ring 16 in Fig. 2 dargestellt. Im Gegensatz zu dem Ring 16, der auf eine Melkbecherhülse 13 aufgesetzt ist, dessen Rand 12 selbst abgerundet ist, ist der Ring 23 zum Aufsezten auf einen rechtwinklig abgekanteten Rand vorgesehen. Aus diesem Grund sind auf der Innenseite des Ringes Flächen als glatte Flächen ausgebildet, die in einem Winkel von 90° zueinander stehen. Da die meisten Melkbecher einen derart abgekanteten Rand besitzen, findet der Ring 23 am häufigsten Einsatz.

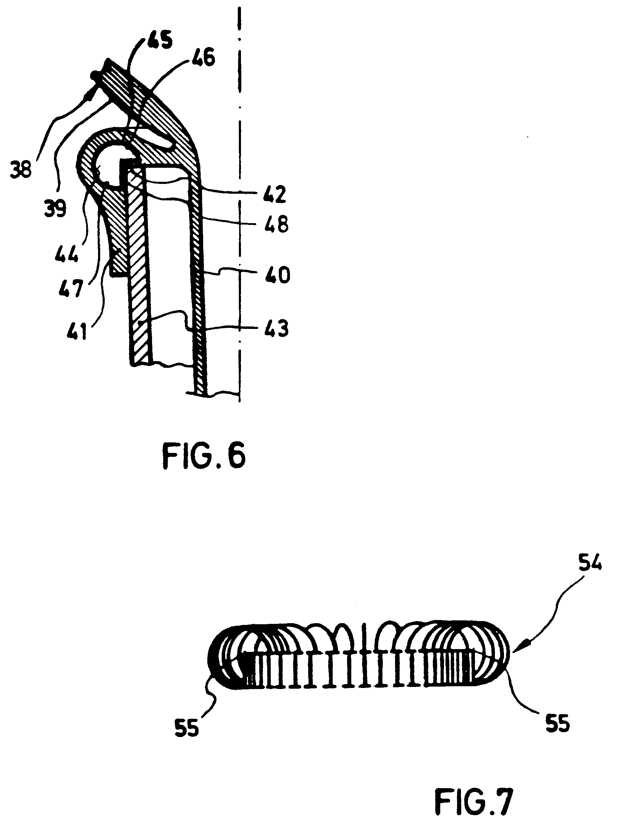

In Fig. 6 ist eine andere Ausführungsform eines erfindungsgemäßen Zitzengummis dargestellt. Das allgemein mit 38 bezeichnete Zitzengummi besteht ebenfalls aus einem jeweils nur teilweise dargestellten Kopf 39, einem Saugstutzen 40 sowie einem den Rand 42 einer Melkbecherhülse 43 übergreifenden Halterand 41. Bei dieser Ausführungsform ist ein Ring 44 vorgesehen, der etwa die Form des Ringes 23 in Fig. 4 aufweisen kann. Der Ring 44 kann aber auch einen Kreisquerschnitt haben, aus dem ein Quadrat herausgeschnitten ist. Die der Kante 42 abgewandte Fläche 45 weist einen wesentlich größeren Krümmungsradius als der Krümmungsradius der nach außen weisenden Kante des Randes 42 auf. Die Gestalt des Ringes ist derart, daß ein Teil 46 über dem nach aufwärts in Fig. 6 weisenden Rand der Kante 42 liegt, während ein Teil 47 seitlich der nach außen weisenden Seitenwand der Melkbecherhülse 43 liegt. Der Ring 44 kann aber auch unmittelbar in den Halterand 41 eingegossen werden. In diesem Fall liegt noch eine Schicht 48 aus dem Material des Zitzengummis zwischen dem Rand 42 und dem Ring 44. Hierdurch wird die Durchschlagfestigkeit nicht beeinträchtigt. Als Material für den Ring könnenn sowohl ein Federstahl, wie ein Kunststoff oder Gummi wie auch ein Textilmaterial verwandt werden.

In Fig. 7 ist ein weiteres Ausführungsbeispiel eines Ringes 54 dargestellt, der entsprechend dem Ring 44 in eine entsprechende Aussparung des Zitzengummis eingelegt oder in den Halterand eines Zitzengummis direkt eingegossen werden kann. Der Ring 54 selbst besteht aus seiner Drahtspirale mit im wesentlichen kreisförmigem Querschnitt, die anschließend derart entlang der Linie 55 eingekerbt ist, daß jede Drahtwindung den Rand einer Fläche beschreibt, die durch Herausschneiden eines Viertels aus einer Kreisscheibe entsteht.

## Patentansprüche

1. Melkbecher mit einer Melkbecherhülse (6; 13; 43) und einem Zitzengummi (1; 8; 38) aus einem geformten Schlauchteil (3; 10; 40), an dessen Außenseite ein Halterand (4; 11; 41) zum Übergreifen eines Randes der Melkbecherhülse angeformt ist, **dadurch gekennzeichnet,** daß auf dem in Längsrichtung der Melkbecherhülse und nach außen weisenden Teil des Randes (12; 42) der Melkbecherhülse (13; 43) ein aus einem anderen Material als das Material des Zitzengummis bestehenden Ring (16; 23) aufliegt, daß in dem dem in Längsrichtung und nach außen weisenden Teil des Randes (12; 42) der Melkbecherhülse (13; 43) gegenüberliegenden Teil des Halterandes eine Ausnehmung (15) vorgesehen ist, in die der Ring (16; 23) einlegbar ist, und daß der Ring (16; 23; 44; 54) auf seiner dem Rand der Melkbecherhülse abgewandten Seite eine Fläche (18; 45) mit einem im Verhältnis zum Krümmungsradius des Melkbecherhülsenrandes größeren Krümmungsradius aufweist.

2. Melkbecher nach Anspruch 1, **dadurch gekennzeichnet,** daß der Ring (11, 23, 43, 54) auf seiner dem Rand (12; 42) der Melkbecherhülse zugewandten Seite eine zu dem Melkbecherhülsenrand komplementäre Formgebung hat.

3. Melkbecher nach einem der Ansprüche 1 oder 2, **dadurch** **gekennzeichnet,** daß der Ring (16, 23, 44, 54) aus einem im Verhältnis zum Material des Zitzengummis harten Material mit einer leichten Nachgiebigkeit besteht.

4. Melkbecher nach einem der Ansprüche 1 oder 2, **dadurch** **gekennzeichnet,** daß der Ring aus einem weichen Material mit einer im Verhältnis zu der Kerbzähigkeit des Zitzengummimaterials erhöhten Kerbzähigkeit besteht.

5. Melkbecher nach einem der Ansprüche 1 bis 4, **dadurch** **gekennzeichnet,** daß der Ring aus einem Federstahl, Kunststoff, Gummi oder einem Textilmaterial besteht.

6. Melkbecher nach Anspruch 5, **dadurch gekennzeichnet,** daß der Ring aus Polyamid, Polyäthylen, Polypropylen, Polyester, Polyurethan oder Polyvinylchlorid besteht.

7. Melkbecher nach einem der Ansprüche 1 bis 6, **dadurch** **gekennzeichnet,** daß der Zitzengummi aus einem Silicongummi besteht.

## Claims

1. Milking-cup with a milking-cup barrel (6; 13; 43) and a teat rubber (1; 8; 38) made as a moulded sheath part (3; 10; 40), with a gripping rim (4; 11; 41) intended to clasp a rim of the milking-cup barrel moulded on to the outside of the said sheath part, characterized in that a ring (16; 23) made of a different material from the material of the teat rubber is fitted over the part of the rim (12; 42) of the milking-cup barrel (13; 43) which points outwards and in the longitudinal direction of the milking-cup barrel; in that a recess (15) into which the ring (16; 23) can be insertec is provided in the part of the gripping rim which opposes the part of the rim (12; 42) of the milking-cup barrel (13; 43) pointing outwards and in the longitudinal direction; and in that the ring (16; 23; 44; 54) possesses, on its side facing away from the rim of the milking-cup barrel, a surface (18; 45) with a larger radius of curvature than the radius of curvature of the rim of the milking-cup barrel.

2. Milking-cup according to Claim 1, characterized in that the ring (11, 23, 43, 54) has a profile matching the rim of the milking-cup barrel on the side of the ring which faces the rim (12; 42) of the milking-cup barrel.

3. Milking-cup according to either of Claims 1 or 2, characterized in that the ring (16, 23, 44, 54) is made of a material which is hard by comparison with the material of the teat rubber, and which is slightly pliable.

4. Milking-cup according to either of Claims 1 or 2, characterized in that the ring is made of a soft material with high notch impact strength by comparison with the notch impact strength of the teat rubber material.

5. Milking-cup according to one of Claims 1 to 4, characterized in that the ring is made of spring steel, plastic, rubber, or textile material.

6. Milking-cup according to Claim 5, characterized in that the ring is made of polyamide, polyethylene, polypropylene, polyester, polyurethane, or polyvinyl chloride.

7. Milking-cup according to one of Claims 1 to 6, characterized in that the teat rubber is made of silicone rubber.

## Revendications

1. Coupelle de traite, avec une douille de coupelle de traite (6; 13; 43) et un manchon trayeur (1; 8; 38), composé d'une partie de tube de tuyau (3; 10; 40) façonnée, en face extérieure de laquelle est formée, d'un seul tenant, une bordure de maintien (4; 11; 41) pour entourer une bordure de la douille de coupelle de traite, caractérisée en ce qu'une bague (16; 23), réalisée en un autre matériau que le matériau du manchon trayeur, repose sur la partie, orientée dans la direction longitudinale de la douille de coupelle de traite et tournée vers l'extérieur de la bordure (12; 42), de la douille de coupelle de traite (13; 43), en ce que, dans la partie de bordure de maintien, opposée à la partie orientée dans la direction longitudinale et tournée vers l'extérieur, de la bordure (12; 42) du manchon de coupelle de traite (13; 43) est prévu un évidement (15) dans lequel la bague (16; 23) peut être insérée, et en ce que la bague (16; 23; 44; 54) présente, sur sa face opposée à la bordure de la douille de coupelle de traite, une face (18; 45) avec un rayon de courbure supérieur à celui de la bordure de la douille de coupelle de traite.

2. Coupelle de traite selon la revendication 1, caractérisée en ce que la bague (11, 23, 43, 54) a, sur la face tournée vers la douille de coupelle de traite, une configuration complémentaire par rapport à la bordure de douille de coupelle de traite.

3. Coupelle de traite selon l'une des revendications 1 ou 2, caractérisée en ce que la bague (16, 23, 44, 54) est composée d'un matériau plus dur que celui du manchon trayeur, offrant une légère souplesse.

4. Coupelle de traite selon l'une des revendications 1 ou 2, caractérisée en ce que la bague est composée d'un matériau souple, avec une résilience supérieure à celle du matériau du manchon trayeur.

5. Coupelle de traite selon l'une des revendications 1 à 4, caractérisée en ce que la bague est réalisée en acier à ressort, en matière synthétique, en caoutchouc ou en un matériau textile.

6. Coupelle de traite selon la revendication 5, caractérisée en ce que la bague est réalisée en polyamide, polyéthylène, polypropylène, polyester, polyuréthane ou polychlorure de vinyle.

7. Coupelle de traite selon l'une des revendications 1 à 6, caractérisée en ce que le manchon trayeur est réalisé en un caoutchouc au silicone.
